# EUROPEAN PATENT SPECIFICATION

(11) **EP 2 306 036 B1**
(45) Date of publication and mention of the grant of the patent: **01.06.2016**
(21) Application number: 09766614.3
(22) Date of filing: 15.06.2009
(51) Int. Cl.: F16C 25/06, F16C 33/58, F16C 19/36, F16C 35/073, F16H 57/02

(54) **TAPERED ROLLER BEARING**
KEGELROLLENLAGER
ROULEMENT À ROULEAUX CONIQUES

(30) Priority: 16.06.2008 JP 2008156896
(43) Date of publication of application: 06.04.2011
(73) Proprietor: NTN Corporation, Osaka-shi, Osaka 550-0003 (JP)
(72) Inventor: KOIZUMI Souta, Iwata-shi Shizuoka 438-8510 (JP)
(74) Representative: Eder, Thomas
(86) International application number: PCT/JP2009/060860
(87) International publication number: WO 2009/154166

(56) References cited:
- WO-A1-2007/038913
- JP-A- 9 177 838
- JP-A- 9 177 838
- JP-A- 2002 178 708
- JP-A- 2002 178 708
- JP-A- 2002 323 049
- JP-A- 2002 323 049
- JP-A- 2004 308 782
- JP-U- 4 001 722
- JP-U- 4 001 722
- JP-U- 60 029 964
- JP-U- 60 029 964
- US-A- 3 972 574
- US-A- 5 647 675

## Description

### Technical Field

The present invention relates to a tapered roller bearing incorporated into gear devices such as transmissions and differentials of automobiles.

### Background Art

Conventional tapered roller bearings include the following as main components: an inner race having a conical raceway surface formed as an outer peripheral surface thereof, a small flange portion formed on a small diameter side of the raceway surface, and a large flange portion formed on a large diameter side of the raceway surface; an outer race having a conical raceway surface formed as an inner peripheral surface thereof; and a plurality of tapered rollers rollably interposed between the raceway surface of the inner race and the raceway surface of the outer race.

In the tapered roller bearings of this type, the inner race is fitted to a mating member (for example, drive pinion shaft or differential gear case of a differential) so that an end surface on a large flange portion side of the inner race (hereinafter, also referred to simply as inner-race end surface) is brought into contact with an end surface of a flange portion extending in a radial direction from the mating member (hereinafter, also referred to simply as flange end surface) and that the outer race is pressed to a flange end surface side. In this manner, an appropriate bearing preload is applied. By such application of the appropriate bearing preload, a fatigue life of the tapered roller bearing is prolonged and gears in a gear device such as a differential are more efficiently meshed with each other so that a trouble such as gear tooth chipping is prevented.

However, when a high torque is input to the gear device, distortion is generated in the mating member, with the result that stick-slip (slippage) occurs between the inner-race end surface and the flange end surface in some cases. In this case, in addition to generation of stick-slip noise, abrasion occurs on the inner-race end surface and the flange end surface. The abrasion occurring in this way on the inner-race end surface and the flange end surface causes the inner race to be separated from the outer race, with the result that the bearing preload is reduced.

Under such circumstance, as a technology for suppressing the abrasion of the inner-race end surface and the flange end surface so that the bearing preload is not reduced, for example, there has been provided a tapered roller bearing (roller bearing) as disclosed in Patent Literature 1 below. The tapered roller bearing includes a washer provided between the inner-race end surface and the flange surface for the purpose of prevention of the abrasion of both the end surfaces. In addition, the washer has a cylindrical portion formed on an outer peripheral edge thereof, and is integrated with the inner race by press fitting of the cylindrical portion to an outer peripheral surface of the large flange portion of the inner race.

### Citation List

Patent Literature: JP 2002-323049 A
From JP 60-29964, a tapered roller bearing is known, which comprises a washer to be provided between the inner-race end surface and the flange surface for the purpose of prevention of the abrasion of both the end surfaces. The washer comprises a number of claw elements to be engaged with a circumferential shoulder portion of a large flange portion of an inner race in order to assemble the bearing with the washer. When integrating the washer and the inner race, accurate alignment of both components is hard to achieve.

### Summary of Invention

### Technical Problems

By the way, when the washer is used for suppressing the abrasion of the inner-race end surface and the flange end surface, it is significantly important, as described above, to integrate the inner race and the washer with each other in advance also in view of enhancement of workability at the time of transportation of the tapered roller bearing into an assembly process with respect to the mating member or at the time of actual assembly of the tapered roller bearing to the mating member after the transportation into the assembly process.

However, meanwhile, when the washer is press-fitted to the inner race as in the tapered roller bearing as disclosed in Patent Literature 1 for the purpose of integrating both the washer and the inner race with each other, it is essential to strictly control a dimensional tolerance of each of the washer and the inner race. This is because, unless the dimensional tolerances of both the washer and the inner race are strictly controlled, an accurate fixation force does not act on both the washer and the inner race, which leads to a problem in that the washer is easily separated from the inner race.

Under such circumstances, when the washer and the inner race are integrated with each other by press fitting, it is necessary to separately perform grinding or the like, for example, on an inner peripheral surface of the cylindrical portion of the washer and the outer peripheral surface of the large flange portion of the inner race so that dimensions of both the washer and the inner race are adjusted. As a result, a problem of a sharp increase in processing cost occurs.

In addition, when press fitting is performed, even when the dimensional tolerances of the washer and the inner race are successfully controlled with high accuracy, it is necessary to accurately position center axes of both the washer and the inner race to each other at the time of press fitting, and to press-fit the washer to the inner race, with the positional relation being maintained. Thus, assembly work of the washer and the inner race is extremely troublesome and complicated, which leads to a problem in that a manufacturing efficiency is markedly reduced.

The present invention has been made in view of the above-mentioned circumstances. It is a technical object of the present invention to provide a tapered roller bearing in which the washer is fixed to the end surface on the large flange portion side of the inner race thereof for the purpose of prevention of the abrasion of the end surface on the large flange portion side of the inner race and of the end surface of the flange portion of the mating member, the tapered roller bearing having the following advantages: a lower processing cost achieved by increase of the dimensional tolerances of the washer and the inner race, the dimensional tolerances being required at the time of fixation of the washer to the inner race; and facilitation of fixation work of the washer to the inner race.

### Solution to Problems

According to the present invention, which has been invented to solve the above-mentioned problem, a tapered roller bearing includes: an inner race having a conical raceway surface formed as an outer peripheral surface thereof, a small flange portion formed on a small diameter side of the raceway surface, and a large flange portion formed on a large diameter side of the raceway surface; an outer race having a conical raceway surface formed as an inner peripheral surface thereof; a plurality of tapered rollers rollably interposed between the raceway surface of the inner race and the raceway surface of the outer race; and a washer for preventing, under a state of being fixed to an end surface on a large flange portion side of the inner race, abrasion of the end surface on the large flange portion side of the inner race and abrasion of an end surface of a flange portion formed on a mating member internally fitted to the inner race, in which: the inner race includes an engagement recess portion provided in an outer peripheral surface of the large flange portion thereof; and the washer includes one or a plurality of elastically deformable claw portions formed on an outer peripheral edge thereof and each provided with an engagement protruding portion engaged with the engagement recess portion.

With a structure according to claim 1, the engagement recess portion of the outer peripheral surface of the large flange portion of the inner race and the engagement protruding portion of each of the claw portions of the washer are engaged with each other, with the result that the washer and the inner race can be integrated with each other. That is, as long as the engagement recess portion and the engagement protruding portion are engaged with each other, a gap may be formed between the outer peripheral surface of the large flange portion of the inner race and the claw portion. Thus, in comparison with the case where both the inner race and the claw portion are integrated with each other by press fitting, dimensional tolerances required at the time of fixation of both the inner race and the claw portion can be markedly increased. As a result, it is unnecessary any longer to perform grinding or the like for adjustment of the dimensional tolerances with high accuracy, and hence possible to achieve reduction of a manufacturing cost.

Further, when the washer is fixed to the inner race, the claw portion of the washer is elastically deformable, and hence the engagement protruding portion of the claw portion of the washer can be pushed into the outer peripheral surface of the large flange portion of the inner race even when a central axis of the inner race and a central axis of the washer are somewhat shifted from each other. That is, the elastic deformation of the claw portion of the washer to the radially outer side absorbs the shift of the central axes of the inner race and the washer. Thus, restriction on fixation work is markedly relaxed in comparison with the case where the inner race and the washer are press-fitted to each other. In addition, when reaching the position of corresponding to the engagement recess portion, the claw portion elastically deformed to the radially outer side restores to a radially inner side by an elastic restoring force, and hence the engagement protruding portion and the engagement recess portion can be semi-automatically engaged with each other. Thus, without forcible, troublesome, and complicated operations during the fixation work of the washer to the inner race, the engagement protruding portion and the engagement recess portion can be easily engaged with each other.

In the above-mentioned structure, it is preferred that the plurality of claw portions be provided at equal intervals along the outer peripheral edge of the washer.

With this, the claw portions of the washer are uniformly arranged around the outer peripheral surface of the large flange portion of the inner race. Thus, the washer and the inner race can be integrated with each other under a more stable state.

In the above-mentioned structure, it is preferred that the engagement recess portion be annularly formed over an entire periphery of the outer peripheral surface of the large flange portion of the inner race.

With this, regardless of the positions in a circumferential direction of the outer peripheral surface of the large flange portion of the inner race, from which the engagement protruding portion of the washer is pushed in, the engagement protruding portion and the engagement recess portion can be reliably engaged with each other.

In the above-mentioned structure, the tapered roller bearing includes a gap, under a state in which the engagement protruding portion and the engagement recess portion are engaged with each other, formed between a roller side of the engagement protruding portion and the engagement recess portion so that the roller side of the engagement protruding portion is kept out of contact with the engagement recess portion.

With this, the gap is formed between the roller side of the engagement protruding portion and the engagement recess portion. Thus, in a practical use aspect in which the mating member is internally fitted to the inner race, when the washer is pressed to the roller side by the flange portion of the mating member, the roller side of the engagement protruding portion is prevented from interfering with the engagement recess portion. Thus, the roller side of the engagement protruding portion does not interfere with the engagement recess portion and excessive stress concentration does not occur to the engagement protruding portion any longer. As a result, a stable engagement state of the engagement protruding portion and the engagement recess portion can be maintained.

In the above-mentioned structure, it is preferred that the engagement protruding portion be roundish.

With this, it is possible to reduce resistance generated when the engagement protruding portion is pushed into the outer peripheral surface of the large flange portion of the inner race. As a result, the engagement protruding portion is more easily pushed-in along the outer peripheral surface of the large flange portion of the inner race.

In the above-mentioned structure, it is preferred that the washer include a nitrided layer formed on a surface thereof.

This configuration is significantly advantageous in preventing the abrasion occurring on the end surface on the large flange portion side of the inner race and the end surface of the flange portion of the mating member internally fitted to the inner race. Further, appropriate toughness is imparted to the washer itself, and hence the elastic deformation of the above-mentioned claw portions can be more smoothly effected. That is, workability in the fixation work of the washer can be enhanced.

In the above-mentioned structure, it is preferred that the washer have a plate thickness of from 0.3 to 0.8 mm.

That is, when the washer has the plate thickness of less than 0.3 mm, the plate thickness of the washer is excessively small, which leads to deterioration of formability thereof. Meanwhile, when the washer has the plate thickness of 0.8 mm or larger, the plate thickness of the washer is excessively large, which leads to an increase in weight of the bearing at the time of fixation of the washer and to an increase in dimension of the bearing owing to the fixation of the washer. Accordingly, it is preferred that the plate thickness of the washer fall within the above-mentioned numerical range. With this setting, increase in weight of the bearing at the time of fixation of the washer and the increase in dimension of the bearing can be suppressed within a practically unproblematic range, and formability at the time of manufacturing of the washer can be satisfactorily maintained as well.

In the above-mentioned structure, it is preferred that B/A range from 0.9 to 2%, where A represents an inner diameter dimension of a part except the engagement protruding portion of the claw portion and B represents a maximum height of the engagement protruding portion.

That is, when B/A is 2% or more, the engagement protruding portion is excessively large relative to the inner diameter dimension of the claw portion (except the engagement protruding portion, being the same hereinafter in this paragraph). Thus, an elastic deformation amount of the claw portion at the time of fixation of the washer is increased, which may lead to deterioration of fixation properties in some cases. Meanwhile, when B/A is less than 0.9%, the engagement protruding portion is excessively small relative to the inner diameter dimension of the claw portion. Thus, hooking of the engagement protruding portion at the time of fixation of the washer to the inner race is too weak, with the result that a fixation force may be reduced in some cases. Accordingly, it is preferred that B/A fall within the above-mentioned numerical range. With this setting, the fixation properties of the washer and the fixation force of the washer after the fixation can be simultaneously enhanced.

In the above-mentioned structure, it is preferred that C/A range from 0 to 1.5%, being greater than 0, where A represents the inner diameter dimension of the part except the engagement protruding portion of the claw portion and C represents a dimension of the gap between the part except the engagement protruding portion of the claw portion and the outer peripheral surface of the large flange portion of the inner race.

That is, when C/A is 1.5% or more, relative to the inner diameter dimension of the claw portion (except the engagement protruding portion, being the same hereinafter in this paragraph), the gap between the claw portion and the outer peripheral surface of the large flange portion of the inner race is excessively large. Thus, after fixation of the washer to the inner race, the washer wobbles with respect to the inner race in some cases. Accordingly, it is preferred that C/A fall within the above-mentioned numerical range. With this setting, the washer can be fixed in an appropriate posture, and the posture can be maintained.

In the above-mentioned structure, the mating member may include a pinion shaft of a differential.

### Advantageous Effects of Invention

According to the present invention, as described above, as long as the engagement recess portion provided to the outer peripheral surface of the large flange portion of the inner race and the engagement protruding portion provided to the claw portion of the washer are engaged with each other, the gap may be formed between the outer peripheral surface of the large flange portion of the inner race and the claw portion. Thus, in comparison with the case where both the inner race and the claw portion are integrated with each other by press fitting, the dimensional tolerances required at the time of fixation of both the inner race and the claw portion can be markedly increased. As a result, it is unnecessary any longer to perform grinding or the like for adjustment of the dimensional tolerances with high accuracy, and hence possible to achieve reduction of a manufacturing cost.

Further, at the time of fixation of the washer to the inner race, the elastic deformation of the elastically-deformable claw portion of the washer to the radially outer side absorbs the shift of the central axes of the inner race and the washer at the time of the fixation. Thus, restriction on fixation work is markedly relaxed in comparison with the case where the inner race is press-fitted to the washer. In addition, when reaching the position of corresponding to the engagement recess portion, the claw portion elastically deformed to the radially outer side restores to a radially inner side by an elastic restoring force, and hence the engagement protruding portion and the engagement recess portion can be semi-automatically engaged with each other. Thus, the washer can be easily fixed to the inner race so that both the washer and the inner race can be integrated with each other.

### Brief Description of Drawings

[Fig. 1]A vertical sectional view of a tapered roller bearing according to a first embodiment of the present invention.
[Fig. 2] A plan view of the washer illustrated in Fig. 1.
[Fig. 3] An enlarged vertical sectional view of the main portion of Fig. 1.
[Fig. 4] A view illustrating a procedure of fixing the washer onto an inner race.
[Fig. 5] Another view illustrating the procedure of fixing the washer onto the inner race.
[Fig. 6] An enlarged vertical sectional view of a main portion of a tapered roller bearing according to the present invention.
[Fig. 7] An enlarged vertical sectional view of a main portion of a tapered roller bearing according to a modification of the embodiment of Fig. 6.

### Description of Embodiments

In the following, description is made of embodiments of the present invention with reference to the drawings.

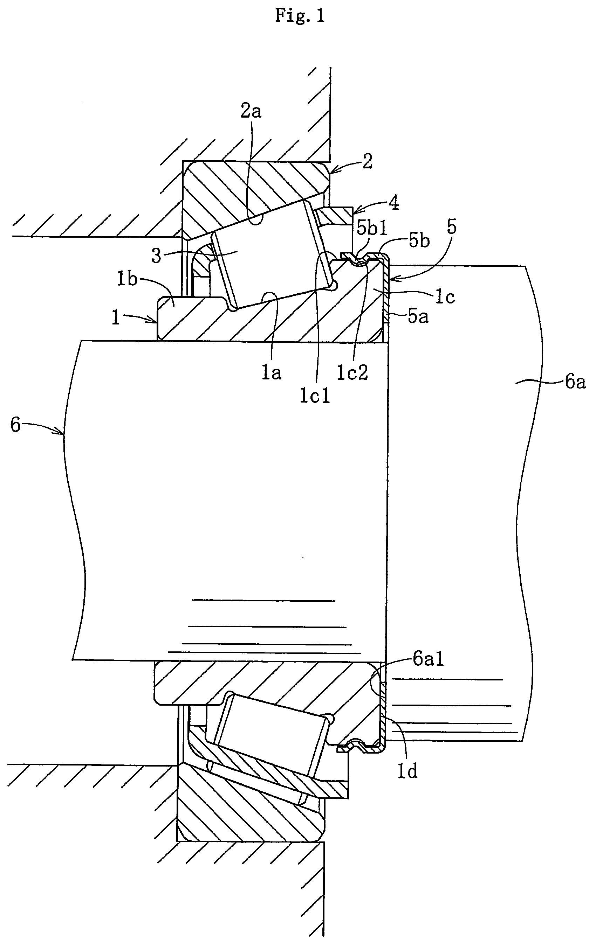

Fig. 1 is a vertical sectional view of a tapered roller bearing according to a first embodiment of the present invention. As illustrated in Fig. 1, the tapered roller bearing includes, as main components, an inner race 1, an outer race 2, and a plurality of tapered rollers 3.

The inner race 1 has a conical raceway surface 1 a formed as an outer peripheral surface thereof, a small flange portion 1 b formed on a small diameter side of the raceway surface 1 a, and a large flange portion 1 c formed on a large diameter side thereof.

The outer race 2 is arranged on an outer peripheral side of the inner race 1, and has a conical raceway surface 2a formed as an inner peripheral surface thereof and facing the raceway surface 1 a of the inner race 1.

The plurality of tapered rollers 3 are rollably interposed between the raceway surface 1a of the inner race 1 and the raceway surface 2a of the outer race 2. Each of the tapered rollers 3 is retained by a retainer 4 at predetermined intervals in a circumferential direction of the bearing.

Further, the tapered roller bearing has a structural feature of including a steel-plate washer 5. The washer 5 is fixed to an end surface 1 d on a large flange portion 1 c side of the inner race 1, and functions to prevent abrasion of the inner-race end surface 1 d and an end surface 6a1 of a flange portion 6a formed on a mating member 6 internally fitted to the inner race 1. Note that, in this embodiment, a nitrided layer is formed on a surface of the washer 5 for the purpose of preventing the abrasion. As a matter of course, in view of prevention of the abrasion, in place of or together with the nitrided layer, a solid lubricant layer may be formed on the surface of the washer 5.

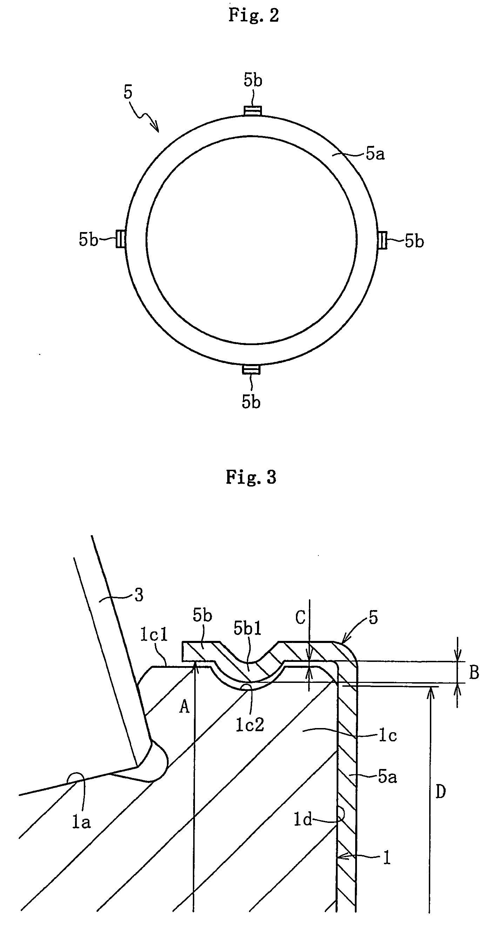

Further, the washer 5 is made of a steel plate having a plate thickness of from 0.3 to 0.8 mm, and as illustrated in Fig. 2, includes a disk-like washer body 5a held in contact with the inner-race end surface 1d and a plurality of elastically deformable claw portions 5b provided on an outer peripheral edge of the washer body 5a at intervals in a circumferential direction (four in total at equal intervals in the circumferential direction in the illustration). As illustrated in Fig. 3, each of the claw portions 5b extends along an outer peripheral surface 1c1 of the large flange portion 1 c of the inner race 1 and includes an engagement protruding portion 5b1 provided near a distal end portion thereof and protruding to a radially inner side. Further, in this embodiment, the engagement protruding portion 5b1 has a roundish shape, and an engagement recess portion 1c2 engaged with the engagement protruding portion 5b1 is annularly formed over the entire periphery of the outer peripheral surface 1 c1 of the inner race 1.

By pushing-in of the engagement protruding portion 5b1 of each of the claw portions 5b along the outer peripheral surface 1 c1 of the large flange portion 1 c of the inner race 1, the engagement protruding portion 5b1 is engaged with the engagement recess portion 1 c2. In this case, after being elastically deformed to expand to a radially outer side, at a position of corresponding to the engagement recess portion 1c2, each of the claw portions 5b restores by an elastic restoring force to a position at which the engagement protruding portion 5b1 is engageable with the engagement recess portion 1 c2.

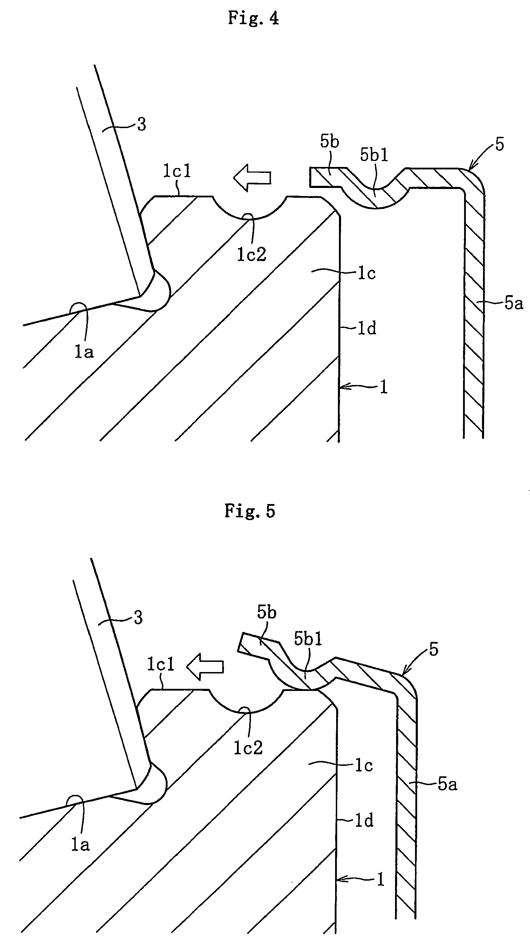

That is, under a state in which the inner race 1 and the washer 5 are separated from each other as illustrated in Fig. 4, when the washer 5 is brought close to the inner race 1 so that the engagement protruding portion 5b1 of each of the claw portions 5b is pushed into the outer peripheral surface 1c1 of the large flange portion 1c of the inner race 1. Then, as illustrated in Fig. 5, the engagement protruding portion 5b1 climbs onto the outer peripheral surface 1 c1 of the large flange portion 1 c of the inner race 1 while being elastically deformed to the radially outer side of the claw portions 5b. Then, under this state, when the engagement protruding portion 5b1 of each of the claw portions 5b is further pushed into the outer peripheral surface 1c1 of the large flange portion 1c of the inner race 1, each of the claw portions 5b restores by the elastic restoring force to the radially inner side at the position of corresponding to the engagement recess portion 1c2. As a result, as illustrated in Fig. 3, the engagement protruding portion 5b1 is engaged with the engagement recess portion 1 c2.

In this manner, the engagement recess portion 1c2 of the outer peripheral surface 1 c1 of the large flange portion 1 c of the inner race 1 and the engagement protruding portion 5b1 of each of the claw portions 5b of the washer 5 are engaged with each other, with the result that the washer 5 and the inner race 1 can be integrated with each other. Thus, as long as the engagement recess portion 1 c2 and the engagement protruding portion 5b1 are engaged with each other, even when a gap is formed between the outer peripheral surface 1 c1 of the large flange portion 1 c of the inner race 1 and each of the claw portions 5b, the washer 5 remains to be hooked to the inner race 1. Accordingly, in comparison with a case where the washer 5 and the inner race 1 are integrated with each other by press fitting, dimensional tolerances required at the time of fixation of both the washer 5 and the inner race 1 can be markedly increased. As a result, it is no longer necessary to perform grinding as post processing on the washer 5 and the inner race 1, and hence a sharp increase in processing cost is prevented.

Further, when the washer 5 is fixed to the inner race 1, the claw portions 5b of the washer 5 are elastically deformable to the radially outer side, and hence the engagement protruding portion 5b1 of each of the claw portions 5b of the washer 5 can be pushed into the outer peripheral surface 1 c1 of the large flange portion 1 c of the inner race 1 even when a central axis of the inner race 1 and a central axis of the washer 5 are somewhat shifted from each other. That is, the elastic deformation of the claw portions 5b of the washer 5 to the radially outer side absorbs the shift of the central axes of the inner race 1 and the washer 5. Thus, restriction on fixation work is markedly relaxed in comparison with the case where the inner race 1 and the washer 5 are press-fitted to each other. In addition, at the position of corresponding to the engagement recess portion 1 c2, each of the claw portions 5b elastically deformed to the radially outer side restores by the elastic restoring force to the position at which the engagement protruding portion 5b1 is engageable with the engagement recess portion 1c2, and hence the engagement protruding portion 5b1 is semi-automatically engaged with the engagement recess portion 1 c2. Thus, the washer 5 can be easily fixed to the inner race 1 so that both the washer 5 and the inner race 1 can be integrated with each other.

Note that, as illustrated in Fig. 3, it is preferred that a dimensional relation between the washer 5 and the inner race 1 satisfy the following relations described below. That is, it is preferred that B/A range from 0.9 to 2.0%, C/A range from 0 to 1.5%, and A be larger than D, where: A represents an inner diameter dimension of a part except the engagement protruding portion 5b1 of the claw portion 5b of the washer 5; B represents a maximum height of the engagement protruding portion 5b1 of the claw portion 5b of the washer 5; C represents a dimension of a gap between the part except the engagement protruding portion 5b1 of the claw portion 5b of the washer 5 and the outer peripheral surface of the large flange portion 1c of the inner race 1; and D represents a radially outer dimension of a flat surface portion of the end surface 1 d on the large flange portion 1 c side of the inner race 1. With this, the fixation work of the washer 5 can be effected with a force small enough for the fixation work to be manually effected. Thus, after the fixation, the washer 5 is more reliably prevented from being detached from the inner race 1 during a transportation process and the like prior to completion of incorporation of the mating member 6.

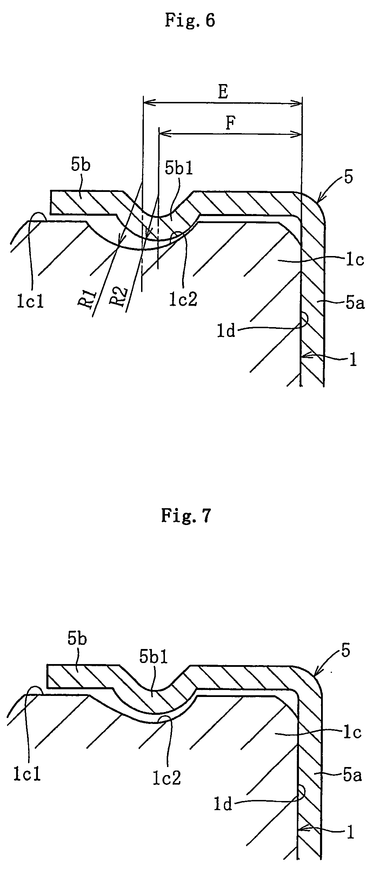

Fig. 6 is an enlarged vertical sectional view of a main portion of a tapered roller bearing according to the present invention. A curvature radius R1 of the engagement recess portion 1c2 is set to be larger than a curvature radius R2 of the engagement protruding portion 5b1, and an axial dimension E from a center curvature of the engagement recess portion 1 c2 to the inner-race end surface 1 d is set to be larger than an axial dimension F from a center curvature of the engagement protruding portion 5b1 to the inner-race end surface 1d. With this, under the state in which the engagement protruding portion 5b1 is engaged with the engagement recess portion 1 c2, a gap is formed between a roller 3 side of the engagement protruding portion 5b1 and the engagement recess portion 1c2. Thus, the roller 3 side of the engagement protruding portion 5b1 is constantly kept out of contact with the engagement recess portion 1 c2. Thus, even when the washer 5 is pressed to the roller 3 side, excessive stress generated by interference of the engagement protruding portions 5b1 with the engagement recess portion 1 c2 is prevented from acting on the claw portions 5b, and hence a stable engagement state can be maintained.

Further, in this view, as illustrated in Fig. 7, the engagement recess portion 1c2 may be asymmetrically formed by cutting-out of the engagement recess portion 1 c2 more on the roller 3 side than on an inner-race end surface 1d side so that the roller 3 side of the engagement protruding portion 5b1 is kept out of contact with the engagement recess portion 1c2.

### Examples

In order to verify the effectiveness of the present invention, evaluation tests were conducted. In detail, as a first example 1, there were prepared a plurality of SPCC washers which were of the same type as the washer described in the above-mentioned first embodiment and which were different from each other in dimensional ratios of B/A and C/A as illustrated in Fig. 3. Claw portions of each of the washers were pushed in an outer peripheral surface of a large flange portion of an inner race having an outer diameter dimension of 46 mm so that engagement protruding portions of the claw portions and engagement recess portions of the large flange portion were engaged each other. In this manner, the washers were fixed to inner-race end surfaces. Further, as a first comparison example, there was prepared a washer provided with, similarly to a conventional one, a cylindrical portion formed on an outer peripheral edge thereof, and the cylindrical portion of the washer was press-fitted to an outer peripheral surface of a large flange portion of an inner race having the outer diameter dimension of 46 mm which was the same as that of the above-mentioned inner race. In this manner, the washer was fixed to an inner-race end surface. Then, in the first example and the first comparison example, evaluations were made of magnitude of incorporating forces required at the time of fixation of the washers to the inner races and magnitude of fixation forces between the washer and the inner race after the fixation. Table 1 below shows the results of the evaluation.

In each cell, an evaluation result of the magnitude of the incorporating force is shown on an upper side and an evaluation result of the magnitude of the fixation force is shown on a lower side. Further, the evaluations of the incorporating forces were made based on the following evaluation criteria: 10 kgf or less of the magnitude of the incorporating force required for fixation was marked as "○"; more than 10 kgf and less than 20 kgf was marked as "Δ"; and 20 kgf or more was marked as "x." Note that, manual incorporation is difficult when the incorporating force is 10 kgf or more, and manual incorporation without use of a machine is substantially impossible when the incorporating force is 20 kgf or more. In addition, special dedicated machines are required in many cases. Meanwhile, the evaluations of the fixation forces were made based on acceleration imparted to the washers fixed to the inner-race end surface: a case where the washer was not separated from the inner-race end surface even with acceleration of 2G or more was marked as "○"; a case where the washer was separated from the inner-race end surface with acceleration of less than 2G and 1 G or more was marked as "Δ"; and a case where the washer was separated from the inner-race end surface with acceleration of less than 1G was marked as "×." Note that, a force of 1G is a normal force considered to be generated when a tapered roller bearing is transported into an assembly process with respect to a mating member or when the tapered roller bearing is actually assembled to the mating member after the transportation into the assembly process, and a force of 2G is a maximum force considered to be generated at the time of such transportation and assembly.

**[Table 1]**

| First example | | | | | | | First comparison example |
|---|---|---|---|---|---|---|---|
| | | B/A [%] | | | | | × |
| | | | | | | | ○ |
| | | 0.85 | 0.90 | 1.50 | 2.00 | 2.05 | |
| C/A [%] | 0.00 | Δ | Δ | Δ | Δ | Δ | |
| | | Δ | ○ | ○ | ○ | ○ | |
| | 0.30 | Δ | Δ | Δ | Δ | Δ | |
| | | Δ | ○ | ○ | ○ | ○ | |
| | 1.00 | Δ | ○ | Δ | Δ | Δ | |
| | | Δ | ○ | ○ | ○ | ○ | |
| | 1.50 | ○ | ○ | Δ | Δ | Δ | |
| | | Δ | ○ | ○ | ○ | ○ | |
| | 1.80 | ○ | ○ | Δ | Δ | Δ | |
| | | Δ | Δ | Δ | Δ | Δ | |

| | | | | | | | |
|---|---|---|---|---|---|---|---|
| Upper side: evaluation result of incorporating force, Lower side: evaluation result of fixation force | | | | | | | |

Table 1 shows that, in the first comparison example, the incorporating forces of the washer were markedly large, that is, at a level that manual fixation could not be effected. Meanwhile, in the first example, the incorporating forces of all the washers were less than 20 kgf, and hence those results confirmed that an excessive incorporation force was not required at the time of fixation. Meanwhile, regarding the fixation forces between the washers and the inner races, press fitting was effected in the first comparison example, and hence satisfactory results were obtained. Also in the first example, none of the result shows that the fixation forces were less than 1 G, and hence those results confirmed that a fixation force within a practically unproblematic range was secured. Thus, the results in the first example confirmed that reduction of the incorporating force and enhancement of the fixation force can be simultaneously achieved.

In addition, as a second example, there were prepared washers which were of the same type as the washers of the above-mentioned first example and on which nitriding treatment was performed so that a nitrided layer of 20 µm or more was formed on the washers. Evaluation tests same as those described in the first example were conducted, and Table 2 shows results of the tests. Note that, the evaluation criteria of the incorporating forces and the fixation forces were the same as the above-mentioned criteria.

**[Table 2]**

| Second example | | | | | | |
|---|---|---|---|---|---|---|
| | | B/A [%] | | | | |
| | | 0.85 | 0.90 | 1.50 | 2.00 | 2.05 |
| C/A [%] | 0.00 | ○ | ○ | ○ | ○ | Δ |
| | | Δ | ○ | ○ | ○ | ○ |
| | 0.30 | ○ | ○ | ○ | ○ | Δ |
| | | Δ | ○ | ○ | ○ | ○ |
| | 1.00 | ○ | ○ | ○ | ○ | Δ |
| | | Δ | ○ | ○ | ○ | ○ |
| | 1.50 | ○ | ○ | ○ | ○ | Δ |
| | | Δ | ○ | ○ | ○ | ○ |
| | 1.80 | ○ | ○ | ○ | ○ | Δ |
| | | Δ | Δ | Δ | Δ | Δ |

| | | | | | | |
|---|---|---|---|---|---|---|
| Upper side: evaluation result of incorporating force, Lower side: evaluation result of fixation force | | | | | | |

Table 2 shows that, in comparison with the first example, the second example provided a larger preferred range in which the evaluation results of both the incorporating forces and the fixation forces were marked as "○" (range in which B/A ranged from 0.90 to 2.00% and C/A ranged from 0.00 to 1.50%). This is probably due to appropriate toughness imparted to the washers by the nitriding treatment, which resulted in enlargement of a range in which the elastic deformation of the claw portions was smoothly effected. This also proves that, in view of reduction of the incorporating force of the washer so that the washer is easily fixed to the inner race, it is preferred that the nitriding treatment be performed on the washer so as to form the nitrided layer on the washer.

### Reference Signs List

- 1: inner race
- 1a: raceway surface
- 1b: small flange portion
- 1c: large flange portion
- 1c1: outer peripheral surface
- 1c2: engagement recess portion
- 1d: inner-race end surface
- 2: outer race
- 2a: raceway surface
- 3: tapered roller
- 4: retainer
- 5: washer
- 5a: washer body
- 5b: claw portion
- 5b1: engagement protruding portion
- 6: mating member
- 6a: flange portion
- 6a1: flange end surface

## Claims

1. A tapered roller bearing, comprising:
an inner race (1) having a conical raceway surface (1a) formed as an outer peripheral surface thereof,
a small flange portion (1 b) formed on a small diameter side of the raceway surface (1a), and a large flange portion (1c) formed on a large diameter side of the raceway surface (1a);
an outer race (2) having a conical raceway surface (2a) formed as an inner peripheral surface thereof;
a plurality of tapered rollers (3) rollably interposed between the raceway surface (1a) of the inner race (1) and the raceway surface (2a) of the outer race (2); and
a washer (5) for preventing, under a state of being fixed to an end surface on a large flange portion side of the inner race (1), and under a state of being in contact with a flange portion (6a) formed on a mating member internally fitted to the inner race on an opposite side of an inner race side of the washer (5), abrasion of the end surface (1 d) on the large flange portion side of the inner race and abrasion of an end surface (6a1) of the flange portion (6a), wherein
the inner race (1) comprises an engagement recess portion (1c2) provided in an outer peripheral surface (1c1) of the large flange portion thereof;
the washer (5) comprises at least one elastically deformable claw portion (5b) formed on an outer peripheral edge thereof, the claw portion (5b) extending from the outer peripheral edge of the washer (5) to a roller side along the outer peripheral surface (1c1) of the large flange portion, **characterized in that** each of the at least one claw portion (5b) includes
a) an engagement protruding portion (5b1) to be engaged with the engagement recess portion (1c2),
b) a portion connecting the engagement protruding portion (5b1) and the outer peripheral edge of the washer (5), and
c) a portion extending from the engagement protruding portion (5b1) to the roller side along the outer peripheral surface (1c1) of the large flange portion;
wherein, when the engagement protruding portion (5b1) is engaged with the engagement recess portion (1c2),
a first radial gap is formed between the outer peripheral surface (1c1) of the large flange portion and the portion connecting the engagement protruding portion (5b1) and the outer peripheral edge of the washer (5), and
a second radial gap is formed between the outer peripheral surface (1c1) of the large flange portion and the portion extending from the engagement protruding portion (5b1) to the roller side, and
wherein, when the washer (5) is in contact with the end surface (1d) on the large flange portion side of the inner race (1), a first axial gap is formed between the engagement recess portion (1c2) and a roller side of the engagement protruding portion (5b1), and a second axial gap is formed between the engagement recess portion (1c2) and an opposite side of the roller side of the engagement protruding portion (5b1).

2. A tapered roller bearing according to claim 1, wherein a plurality of claw portions (5b) is provided at equal intervals along the outer peripheral edge of the washer (5).

3. A tapered roller bearing according to claim 1, wherein the engagement recess portion (1c2) is annularly formed over an entire periphery of the outer peripheral surface (1c1) of the large flange portion (1c) of the inner race.

4. A tapered roller bearing according to claim 1, wherein the gap, under a state in which the engagement protruding portion (5b1) and the engagement recess portion (1c2) are engaged with each other, formed between the roller side of the engagement protruding portion (5b1) and the engagement recess portion (1c2) is such that the roller side of the engagement protruding portion (5b1) is kept out of contact with the engagement recess portion (1c2).

5. A tapered roller bearing according to claim 1, wherein the engagement protruding portion (5b1) is roundish.

6. A tapered roller bearing according to claim 1, wherein the washer (5) comprises a nitrided layer formed on a surface thereof.

7. A tapered roller bearing according to claim 1, wherein the washer (5) has a plate thickness of from 0.3 to 0.8 mm.

8. A tapered roller bearing according to claim 1, wherein B/A ranges from 0.9 to 2%, where A represents an inner diameter dimension of a part except the engagement protruding portion (5b1) of the claw portion (5b) and B represents a maximum height of the engagement protruding portion (5b1) of the claw portion (5b).

9. A tapered roller bearing according to claim 1, wherein C/A ranges from 0 to 1.5%, being greater than 0, where A represents the inner diameter dimension of the part except the engagement protruding portion (5b1) of the claw portion (5b) and C represents a dimension of the gap between the part except the engagement protruding portion (5b1) of the claw portion (5b) and the outer peripheral surface (1c1) of the large flange portion (1c) of the inner race (1).

10. A tapered roller bearing according to claim 1, wherein the tapered roller bearing is adapted to mate with a mating member which comprises a pinion shaft of a differential.

## Patentansprüche

1. Kegelrollenlager, welches aufweist:
einen inneren Laufring (1) mit einer konischen Lauffläche (1a), die als äußere Umfangsfläche desselben ausgebildet ist,
einen kleinen Flanschbereich (1 b), der auf einer Seite kleinen Durchmessers der Lauffläche (1a) ausgebildet ist, und einen großen Flanschbereich (1c), der auf einer Seite großen Durchmessers der Lauffläche (1 a) ausgebildet ist;
einen äußeren Laufring (2) mit einer konischen Lauffläche (2a), die als innere Umfangsfläche desselben ausgebildet ist;
mehrere Kegelrollen (3), die drehbar zwischen der Lauffläche (1 a) des inneren Laufrings (1) und der Lauffläche (2a) des äußeren Laufrings (2) angeordnet sind; und
eine Zwischenscheibe (5), um in einem Zustand, in dem diese an einer Endfläche auf einer Seite des großen Flanschbereichs des inneren Laufrings (1) befestigt ist, und in einem Zustand, in dem diese mit einem Flanschbereich (6a) in Kontakt ist, der an einem Gegenelement ausgebildet ist, welches innen am inneren Laufring auf einer gegenüberliegenden Seite einer Innenlaufringseite der Zwischenscheibe (5) angebracht ist, ein Abreiben der Endfläche (1 d) auf der Seite des großen Flanschbereichs des inneren Laufrings und ein Abreiben einer Endfläche (6a1) des Flanschbereichs (6a) zu verhindern,
wobei
der innere Laufring (1) einen Eingriffs-Ausnehmungsbereich (1c2) aufweist, der in einer äußeren Umfangsfläche (1c1) des großen Flanschbereichs desselben vorgesehen ist;
die Zwischenscheibe (5) mindestens einen elastisch verformbaren Klauenbereich (5b) aufweist, der an einer äußeren Umfangskante derselben ausgebildet ist, wobei der Klauenbereich (5b) sich von der äußeren Umfangskante der Zwischenscheibe (5) entlang der äußeren Umfangsfläche (1c1) des großen Flanschbereichs zu einer Rollenseite hin erstreckt,
**dadurch gekennzeichnet, dass** jeder der mindestens einen Klauenbereiche (5b)
a) einen Eingriffs-Vorsprungbereich (5b1), der mit dem Eingriffs-Ausnehmungsbereich (1c2) in Eingriff zu bringen ist,
b) einen Bereich, der den Eingriffs-Vorsprungbereich (5b1) und die äußere Umfangskante der Zwischenscheibe (5) verbindet, und
c) einen Bereich, der sich von dem Eingriffs-Vorsprungbereich (5b1) entlang der äußeren Umfangsfläche (1c1) des großen Flanschbereichs zur Rollenseite hin erstreckt,
aufweist,
wobei, wenn der Eingriffs-Vorsprungbereich (5b1) mit dem Eingriffs-Ausnehmungsbereich (1c2) in Eingriff steht, ein erster radialer Spalt zwischen der äußeren Umfangsfläche (1c1) des großen Flanschbereichs und dem Bereich,
der den Eingriffs-Vorsprungbereich (5b1) und die äußere Umfangskante der Zwischenscheibe (5) verbindet, gebildet wird, und
ein zweiter radialer Spalt zwischen der äußeren Umfangsfläche (1c1) des großen Flanschbereichs und dem Bereich, der sich von dem Eingriffs-Vorsprungbereich (5b1) zur Rollenseite hin erstreckt, gebildet wird, und
wobei, wenn die Zwischenscheibe (5) mit der Endfläche (1 d) auf der Seite des großen Flanschbereichs des inneren Laufrings (1) in Kontakt ist, ein erster axialer Spalt zwischen dem Eingriffs-Ausnehmungsbereich (1 c2) und einer Rollenseite des Eingriffs-Vorsprungbereichs (5b1) gebildet wird, und ein zweiter axialer Spalt zwischen dem Eingriffs-Ausnehmungsbereich (1c2) und einer gegenüberliegenden Seite der Rollenseite des Eingriffs-Vorsprungbereichs (5b1) gebildet wird.

2. Kegelrollenlager nach Anspruch 1, bei dem mehrere Klauenbereiche (5b) entlang der äußeren Umfangskante der Zwischenscheibe (5) in gleichen Abständen vorgesehen sind.

3. Kegelrollenlager nach Anspruch 1, bei dem der Eingriffs-Ausnehmungsbereich (1 c2) ringförmig über einen gesamten Umfang der äußeren Umfangsfläche (1c1) des großen Flanschbereichs (1 c) des inneren Laufrings ausgebildet ist.

4. Kegelrollenlager nach Anspruch 1, bei dem der Spalt, der in einem Zustand, in dem der Eingriffs-Vorsprungbereich (5b1) und der Eingriffs-Ausnehmungsbereich (1 c2) miteinander in Eingriff stehen, zwischen der Rollenseite des Eingriffs-Vorsprungbereichs (5b1) und dem Eingriffs-Ausnehmungsbereich (1c2) gebildet wird, derart ist, dass die Rollenseite des Eingriffsvorsprungbereichs (5b1) außer Kontakt mit dem Eingriffs-Ausnehmungsbereich (1 c2) gehalten wird.

5. Kegelrollenlager nach Anspruch 1, bei dem der Eingriffs-Vorsprungbereich (5b1) rundlich ist.

6. Kegelrollenlager nach Anspruch 1, bei dem die Zwischenscheibe (5) eine nitriergehärtete Schicht aufweist, die auf einer Oberfläche derselben ausgebildet ist.

7. Kegelrollenlager nach Anspruch 1, bei dem die Zwischenscheibe (5) eine Plattendicke von 0,3 bis 0,8mm hat.

8. Kegelrollenlager nach Anspruch 1, bei dem der Wert B/A zwischen 0,9 und 2% liegt, wobei A für eine Innendurchmessergröße eines Teils mit Ausnahme des Eingriffs-Vorsprungbereichs (5b1) des Klauenbereichs (5b) und B für eine maximale Höhe des Eingriffs-Vorsprungbereichs (5b1) des Klauenbereichs (5b) steht.

9. Kegelrollenlager nach Anspruch 1, bei dem der Wert C/A zwischen 0 und 1,5% liegt und größer als 0 ist, wobei A für die Innendurchmessergröße des Teils mit Ausnahme des Eingriffsvorsprungbereichs (5b1) des Klauenbereichs (5b) steht und C für eine Größe des Spalts zwischen dem Teil mit Ausnahme des Eingriffs-Vorsprungbereichs (5b1) des Klauenbereichs (5b) und der äußeren Umfangsfläche (1c1) des großen Flanschbereichs (1c) des inneren Laufrings (1) steht.

10. Kegelrollenlager nach Anspruch 1, bei dem das Kegelrollenlager angepasst ist, um mit einem Gegenelement zusammenzupassen, das eine Ritzelwelle eines Differentials aufweist.

## Revendications

1. Roulement à rouleaux coniques, comprenant :
un chemin de roulement intérieur (1) qui présente une surface de chemin de roulement conique (1a) formée en tant que surface périphérique extérieure de celui-ci ;
une petite partie bride (1b) formée sur un côté petit diamètre de la surface de chemin de roulement (1 a), et une grande partie bride (1c) formée sur un côté grand diamètre de la surface de chemin de roulement (1 a) ;
un chemin de roulement extérieur (2) qui présente une surface de chemin de roulement conique (2a) formée en tant que surface périphérique intérieure de celui-ci ;
une pluralité de rouleaux coniques (3) interposés de manière à pouvoir rouler entre la surface de chemin de roulement (1 a) du chemin de roulement intérieur (1) et la surface de chemin de roulement (2a) du chemin de roulement extérieur (2) ; et
une rondelle (5) destinée à empêcher, dans un état où elle est fixée sur une surface d'extrémité du côté grande partie bride du chemin de roulement intérieur (1), et dans un état où elle est en contact avec une partie bride (6a) formée sur un élément d'accouplement ajusté intérieurement dans le chemin de roulement intérieur sur un côté opposé du côté chemin de roulement intérieur de la rondelle (5), une abrasion de la surface d'extrémité (1d) sur le côté grande partie bride du chemin de roulement intérieur, et une abrasion de la surface d'extrémité (6a1) de la partie bride (6a) ;
dans lequel :
le chemin de roulement intérieur (1) comprend une partie renfoncement de mise en prise (1c2) disposée dans une surface périphérique extérieure (1c1) de la grande partie bride de celle-ci ;
la rondelle (5) comprend au moins une partie griffe qui peut se déformer de manière élastique (5b) formée sur un bord périphérique extérieur de celle-ci, la partie griffe (5b) s'étendant à partir du bord périphérique extérieur de la rondelle (5) vers un côté rouleau le long de la surface périphérique extérieure (1c1) de la grande partie bride, **caractérisé en ce que** la ou les parties griffes (5b) comprennent :
a) une partie saillie de mise en prise (5b1) destinée à venir en prise avec la partie renfoncement de mise en prise (1c2) ;
b) une partie qui connecte la partie saillie de mise en prise (5b1) et le bord périphérique extérieur de la rondelle (5) ; et
c) une partie qui s'étend à partir de la partie saillie de mise en prise (5b1) vers le côté rouleau le long de la surface périphérique extérieure (1c1) de la grande partie bride ;
dans lequel, lorsque la partie saillie de mise en prise (5b1) vient en prise avec la partie renfoncement de mise en prise (1 c2) :
un premier espace radial est formé entre la surface périphérique extérieure (1c1) de la grande partie bride et la partie qui connecte la partie saillie de mise en prise (5b1) et le bord périphérique extérieur de la rondelle (5) ; et
un second espace radial est formé entre la surface périphérique extérieure (1c1) de la grande partie bride, et la partie qui s'étend à partir de la partie saillie de mise en prise (5b1) vers le côté rouleau ; et
dans lequel, lorsque la rondelle (5) est en contact avec la surface d'extrémité (1d) sur le côté grande partie bride du chemin de roulement intérieur (1), un premier espace axial est formé entre la partie renfoncement de mise en prise (1 c2) et un côté rouleau de la partie saillie de mise en prise (5b1), et un second espace axial est formé entre la partie renfoncement de mise en prise (1 c2) et un côté opposé du côté rouleau de la partie saillie de mise en prise (5b1).

2. Roulement à rouleaux coniques selon la revendication 1, dans lequel une pluralité de parties griffes (5b) sont disposées à intervalles égaux le long du bord périphérique extérieur de la rondelle (5).

3. Roulement à rouleaux coniques selon la revendication 1, dans lequel la partie renfoncement de mise en prise (1 c2) est formée de manière annulaire sur toute la périphérie de la surface périphérique extérieure (1c1) de la grande partie bride (1c) du chemin de roulement intérieur.

4. Roulement à rouleaux coniques selon la revendication 1, dans lequel, dans un état dans lequel la partie saillie de mise en prise (5b1) et la partie renfoncement de mise en prise (1 c2), sont mises en prise l'une avec l'autre, l'espace formé entre le côté rouleau de la partie saillie de mise en prise (5b1) et la partie renfoncement de mise en prise (1 c2), est tel que le côté rouleau de la partie saillie de mise en prise (5b1) est maintenu hors de contact avec la partie renfoncement de mise en prise (1 c2).

5. Roulement à rouleaux coniques selon la revendication 1, dans lequel la partie saillie de mise en prise (5b1) est plutôt ronde.

6. Roulement à rouleaux coniques selon la revendication 1, dans lequel la rondelle (5) comprend une couche nitrurée formée à la surface de celle-ci.

7. Roulement à rouleaux coniques selon la revendication 1, dans lequel la rondelle (5) présente une épaisseur de tôle comprise entre 0,3 mm et 0,8 mm.

8. Roulement à rouleaux coniques selon la revendication 1, dans lequel le rapport B / A se situe dans une plage comprise entre 0,9 % et 2 %, dans lequel A représente la dimension du diamètre intérieur d'une partie, à l'exception de la partie saillie de mise en prise (5b1), de la partie griffe (5b), et B représente la hauteur maximum de la partie saillie de mise en prise (5b1) de la partie griffe (5b).

9. Roulement à rouleaux coniques selon la revendication 1, dans lequel le rapport C / A se situe dans une plage comprise entre 0 % et 1,5 %, en étant supérieur à 0, dans lequel A représente la dimension du diamètre intérieur de la partie saillie de mise en prise (5b1) de la partie griffe (5b), et C représente la dimension de l'espace entre la partie, à l'exception de la partie saillie de mise en prise (5b1), de la partie griffe (5b), et la surface périphérique extérieure (1c1) de la grande partie bride (1c) du chemin de roulement intérieur (1).

10. Roulement à rouleaux coniques selon la revendication 1, dans lequel le roulement à rouleaux coniques est adapté de façon à s'accoupler à un élément d'accouplement qui comprend un arbre de pignon d'un différentiel.
